# EUROPEAN PATENT SPECIFICATION

(11) **EP 1 501 175 B1**
(45) Date of publication and mention of the grant of the patent: **24.05.2006**
(21) Application number: 03291613.2
(22) Date of filing: 01.07.2003
(51) Int. Cl.: H02M 1/00, H02J 7/00

(54) **Method to prevent saturation of an inductor coil and inductor coil circuits for realising such a method**
Verfahren zur Verhinderung der Sättigung einer Induktanzspule und Induktanzspulenschaltung für die Ausführung eines solchen Verfahrens
Procédé pour éviter la saturation d'un enroulement inductif et circuit d'enroulement inductif pour la realisation d'un tel procédé

(43) Date of publication of application: 26.01.2005
(73) Proprietor: ALCATEL, 75008 Paris (FR)
(72) Inventor: Sevenhans, Joannes Mathilda Josephus, 2930 Brasschaat (BE); Moons, Elvé Desiderius Jozef, 3560 Lummen (BE)
(74) Representative: Narmon, Gisèle Marie Thérèse

(56) References cited:
- EP-A- 0 546 652
- US-A1- 2001 006 470
- PATENT ABSTRACTS OF JAPAN vol. 1997, no. 10, 31 October 1997 (1997-10-31) & JP 09 149689 A (MEIDENSHA CORP), 6 June 1997 (1997-06-06)
- PATENT ABSTRACTS OF JAPAN vol. 013, no. 421 (E-822), 19 September 1989 (1989-09-19) & JP 01 157265 A (FUJI ELECTRIC CO LTD), 20 June 1989 (1989-06-20)
- PATENT ABSTRACTS OF JAPAN vol. 2003, no. 05, 12 May 2003 (2003-05-12) & JP 2003 023774 A (SEIKO EPSON CORP), 24 January 2003 (2003-01-24)
- PATENT ABSTRACTS OF JAPAN vol. 1997, no. 11, 28 November 1997 (1997-11-28) & JP 09 186530 A (SANYO ELECTRIC CO LTD), 15 July 1997 (1997-07-15)
- PATENT ABSTRACTS OF JAPAN vol. 018, no. 029 (E-1492), 17 January 1994 (1994-01-17) & JP 05 260787 A (ISAO TAKAHASHI;OTHERS: 01), 8 October 1993 (1993-10-08)
- PATENT ABSTRACTS OF JAPAN vol. 008, no. 091 (E-241), 26 April 1984 (1984-04-26) & JP 59 010167 A (SANYO DENKI KK), 19 January 1984 (1984-01-19)
- PATENT ABSTRACTS OF JAPAN vol. 018, no. 029 (E-1492), 17 January 1994 (1994-01-17) & JP 05 260757 A (ISAO TAKAHASHI;OTHERS: 01), 8 October 1993 (1993-10-08)
- PATENT ABSTRACTS OF JAPAN vol. 015, no. 026 (E-1025), 22 January 1991 (1991-01-22) & JP 02 269465 A (FUJI ELELCTROCHEM CO LTD), 2 November 1990 (1990-11-02)

## Description

The present invention relates to a method to prevent saturation of inductor coils as described in the preamble of claim 1.

Such a method is already known in the art, for instance in the *published US patent application 2001*/*0006470*. Therein a control circuit for a load in an automotive vehicle is described, comprising a chopping circuit, at least an LC filter, and means opposing the saturation of the inductor of the LC circuit. This means for opposing the saturation of the inductor is provided such as to prebias the inductor in a chosen direction. This is obtained by an auxiliary winding which is wound as one and the same element with the coil, around one and the same magnetic core. The auxiliary winding is permanently energized by a current directed in an opposite direction as that of the current through the primary winding. The auxiliary winding therefore induces an opposite magnetic field to that generated by the primary winding ,when this coil is traversed by the normal load current through this primary winding. The auxiliary coil is thus prebiased in a direction which increases the threshold beyond which the normal current through the primary winding saturates the coil. This auxiliary current is continuously kept in the same direction and with the same magnitude over time.

A drawback of such a method is that it uses an extra winding, which increases the volume of the total coil circuit, and that it needs an extra current through this extra winding, increasing the total power consumption of the coil circuit.

In the published European Patent Application 0 546 652 an electric power unit is disclosed, for transferring power from a battery to a load. This electric power unit basically comprises a DC/DC converter which may be bypassed by a controllable switch in case the output voltage of the battery is high enough. In the latter case the switch is closed such that the entire DC/DC converter, including a coil, is bypassed. This means that , in this situation, absolutely no current is passed to this coil . One could conclude that saturation of the coil is avoided, but via an on/off regulation of a bypass circuit which either takes over all the current from the coil, or either does not conduct any current at all.

It is however desirable to provide a method to avoid saturation of a magnetic core of a coil circuit of the above known kind, but which still allows the coil to be operative, i.e. which allows some current to flow through the coil, while at the same time being simple and power efficient.

According to the invention, this object is achieved due to the fact that said method includes the steps as described in claim 1.

In this way, the dc current flowing through the normal winding and which normally causes the saturation of the magnetic core, is continuously bypassed through a bypass circuit. It is evident that such a solution does not consume an extra dc current, neither requires an extra winding around the magnetic core. Furthermore since the bypass circuit only bypasses the DC current and not the AC current, the coil remains operational.

A further characteristic feature of the present invention is described in claim 2.

By providing a variable current source for the bypass circuit a simple implementation is obtained.

Another characteristic feature of the present invention is mentioned in claim 3.

The regulation step thereby determines the amount of current which is bypassed by the variable current source.

The present invention also relates to an inductor coil circuit for realising the aforementioned method, as is described in claims 4 ,5 and 7. Claim 6 further describes a simple implementation of the variable current source through which the DC current is bypassed

Another characteristic feature of the present invention is mentioned in claim 8.

The regulation circuit is thereby such as to create a DC voltage drop across the variable current source. This voltage drop is required e.g. in order to be able to implement the (active) gyrator circuit and enable a DC current flow through it.

The regulation circuit can be a capacitor or a resistor, as is mentioned in claims 9 and 10. They both describe a very simple implementation of the regulation circuit. The capacitor implementation further has the advantage of providing a clear low-impedance path for the high frequencies towards the coil, and to conduct all DC-current to the bypass.

The subject method is as well applicable to and the invention as well relates to a circuit including a series connection of coils, such as for instance a filter circuit, as is further stated in claim 11.

One or more bypass circuits can therefore be provided, either across each individual coil, or either across one or more coils in series. The most cost-effective solution of course exist when one bypass circuit is foreseen to bypass the series connections of all coils .

It is to be noticed that the term 'coupled', used in the claims, should not be interpreted as being limitative to direct connections only. Thus, the scope of the expression 'a device A coupled to a device B' should not be limited to devices or systems wherein an output of device A is directly connected to an input of device B. It means that there exists a path between an output of A and an input of B which may be a path including other devices or means.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein
Fig. 1 gives a basic scheme of an inductor circuit LBP according to the invention, and
Fig. 2 gives a basic scheme of a filter circuit F including a series connections of coils in which the invention is as well implemented.

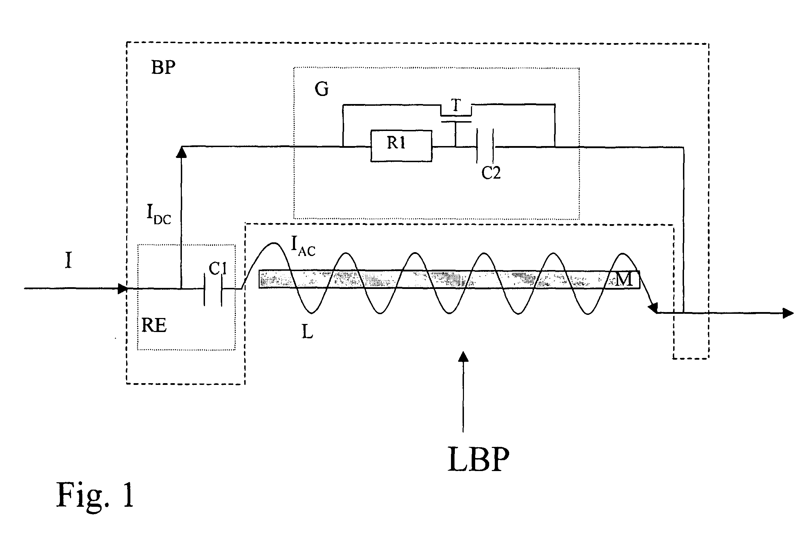

Fig. 1 shows a inductor circuit LBP including a conventional coil L wound around a magnetic core M, to which an input current I is provided. Across and in parallel with the coil a bypass circuit BP is present through which the DC current which would normally flow through the coil, is now bypassed. This bypassing of the DC current is further obtained by means of a regulating circuit RE, which splits the current which is fed to the coil into a dc and an ac component, the dc component IDC being guided within the bypass circuit, and the ac component I_{AC} being guided to the coil itself. The regulation circuit is such as to create a DC voltage drop across the bypass circuit. The circuit of the bypass circuit through which the DC current is really bypassed further has to be low-impedant for DC . In this way most of the DC current flows through the bypass circuit, whereas the normal ac current flows through the coil. Examples of such regulation circuits are a simple capacitor, as denoted C1 in Fig. 1, or a resistor which may take the place of the capacitor C1 in Fig. 1. The impedance of the resistor has to be such as to block a large part of the DC current, which accordingly has to flow then to the parallel circuit across the coil and resistor.

The bypass circuit further comprises a variable dc current source such as for instance an active inductor G based on a gyrator concept. A simple embodiment is shown in Fig. 1, whereby this gyrator circuit G consists of a series coupling of a resistor R1 and a capacitor C2, the junction point between these components being coupled to the control electrode of an active device T such as a transistor. The two main current conducting terminals of this active device T are coupled to the respective other terminals of the resistor and the capacitor. This gyrator together with the capacitor C1 of the provides a self-regulating bypass circuit which conducts all of the DC current via the gyrator since the capacitor C1 blocks all DC current to the coil. In case of a resistor instead of C1, the DC blocking is not complete, but by selecting the value of the series resistor to the coil to be significantly higher than that of the gyrator, only a limited amount of DC current flows through the coil itself.

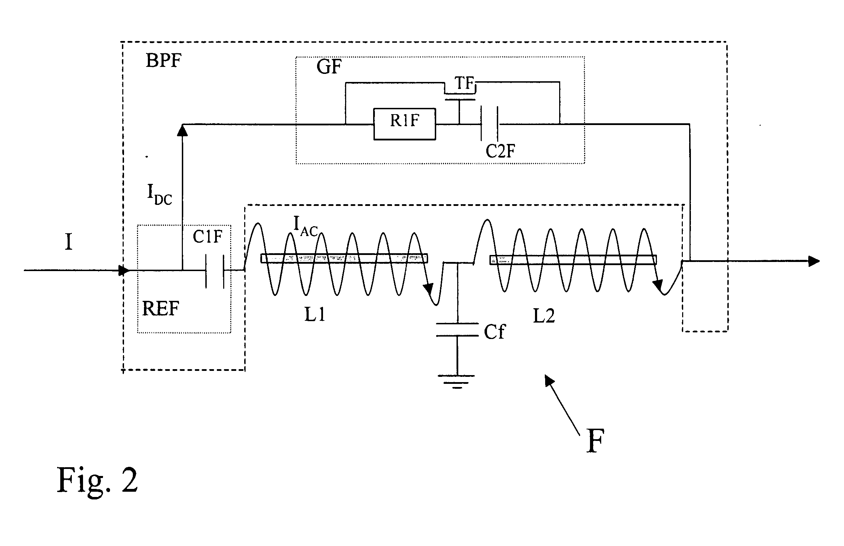

This invention is as well applicable to other circuits, such as for instance filter circuits, including a series connection of several coils such as shown in Fig. 2 which shows a simple filter consisting of inductors L1 and L2 and a capacitor Cf. For such a circuit, saturation of the magnetic core of either coil L1 or L2 can be avoided by either providing a separate bypass circuit per coil such as shown in Fig. 1, or by either providing one bypass circuit across several coils. The latter situation is shown in Fig. 2 where one single bypass circuit BPF comprising a regulating circuit REF consisting of capacitor C1F, a gyrator circuit BPF consisting of resistor R1 F, Capacitor C2F and transistor TF is provided for the two coils. This principle is also applicable to higher order filters, including more than 2 coils, each of them being intersected by a capacitor. Advantages of such a solution are that, due to less saturation in the coil, smaller magnetic cores can be used, resulting in less volume for the filters , such as splitter circuits. The extra circuitry required for the bypass circuit does not counteract this advantage since such an active inductor or gyrator principle, together with the capacitor can be integrated on an integrated circuit.

While the principles of the invention have been described above in connection with specific apparatus, it is to be clearly understood that this description is made only by way of example and not as a limitation on the scope of the invention, as defined in the appended claims.

## Claims

1. Method to avoid saturation of the magnetic core (M) of an inductor coil (L), said method including the steps of providing a continuous bypass circuit (BP) across said inductor coil (L) for bypassing a DC current to said coilsuch that the current (I) which is fed to the coil is splitted into a DC and and AC component, the DC component (I_{DC} )being guided within the bypass circuit, and the AC component (I_{AC}) being guided to the coil (L) itself.

2. Method according to claim 1, wherein said step of bypassing said DC current is performed via the provision of a variable current source.

3. Method according to claim 1, wherein said method further includes a step of providing a regulation circuit (RE) for regulating the level of the DC current which is bypassed.

4. Inductor circuit (LBP) including a coil winding (L) around a magnetic core (M)
**characterised in that**
said inductor circuit (LBP) further includes a bypass circuit (BP) for continuously bypassing a DC current through said coil winding (L) such that the current (I) which is fed to the coil is splitted into a DC and and AC component, the DC component (I_{DC}) thereof further being guided within the bypass circuit, and the AC component (I_{AC}) thereof being guided to the coil (L) itself.

5. Inductor circuit (LBP) according to claim 4, wherein said bypass circuit (BP) comprises a variable current source.

6. Inductor circuit (LBP) according to claim 5, wherein said bypass circuit (BP) includes a gyrator circuit (R1,C2,T).

7. Inductor circuit (LBP) according to claim 4, wherein said inductor circuit further includes a regulation circuit (RE) for regulating the level of the DC current (I_{DC})which is bypassed.

8. Inductor circuit (LBP) according to claim 7, wherein said regulation circuit (RE) includes means (C1) to create a DC voltage drop across said variable current source.

9. Inductor circuit according to claim 9, wherein said regulation circuit includes a capacitor (C1).

10. Inductor circuit according to claim 9, wherein said regulation circuit includes a resistor.

11. Circuit (F) including a series connection of coils (L1,L2), **characterised in that** said circuit (F) further includes at least one bypass circuit (BPF) according to any of the previous claims 5 to 10 across one or more of said coils (L1,L2).

## Patentansprüche

1. Verfahren zur Verhinderung der Sättigung des magnetischen Kerns (M) einer Induktionsspule (L), wobei das Verfahren die Schritte der Bereitstellung eines kontinuierlichen Überbrückungs-Schaltkreises (BP) über der Induktionsspule (L) umfasst, um einen Gleichstrom zu der Spule zu überbrücken, so dass der Strom (I), der an die Spule geliefert wird in eine DC- und eine AC-Komponente aufgeteilt wird, wobei die DC-Komponente (I_{DC}) im Überbrückungs-Schaltkreis geführt wird und die AC-Komponente (I_{AC}) zur Spule (L) selbst geleitet wird.

2. Verfahren gemäß Anspruch 1, worin der Schritt der Überbrückung des Gleichstroms durch Bereitstellung einer variablen Stromquelle durchgeführt wird.

3. Verfahren gemäß Anspruch 1, worin das Verfahren weiterhin einen Schritt der Bereitstellung eines Regelungs-Schaltkreises (RE) zur Regelung des Pegels des Gleichstroms, der überbrückt wird, umfasst.

4. Induktionsspulenschaltung (LBP), die eine Spulen-Wicklung (L) um einen magnetischen Kern (M) enthält,
**dadurch gekennzeichnet, dass**
die Induktionsspulenschaltung (LBP) weiterhin einen Überbrückungs-Schaltkreis (BP) zur kontinuierlichen Überbrückung eines Gleichstroms durch die Spulenwicklung (L) enthält, so dass der Strom (I), der an die Spule geliefert wird, in eine DC- und eine AC-Komponente aufgeteilt wird, wobei die DC-Komponente (I_{DC}) weiterhin innerhalb des Überbrückungs-Schaltkreises und die AC-Komponente (I_{AC}) in der Spule (L) selbst geführt wird.

5. Induktionsspulenschaltung (LBP) gemäß Anspruch 4, worin der Überbrückungs-Schaltkreis (BP) eine variable Stromquelle enthält.

6. Induktionsspulenschaltung (LBP) gemäß Anspruch 5, worin der Überbrückungs-Schaltkreis (BP) einen Gyrator-Schaltkreis (R1, C2, T) enthält.

7. Induktionsspulenschaltung (LBP) gemäß Anspruch 4, worin die Induktionsspulenschaltung weiterhin einen Regelungs-Schaltkreis (RE) zur Regelung des Pegels des Gleichstroms (I_{DC}) enthält, der überbrückt wird.

8. Induktionsspulenschaltung (LBP) gemäß Anspruch 7, worin der Regelungs-Schaltkreis (RE) Mittel (C1) enthält, um einen DC-Spannungsabfall über der variablen Stromquelle zu erzeugen.

9. Induktionsspulenschaltung gemäß Anspruch 9, worin der Regelungs-Schaltkreis einen Kondensator (C1) enthält.

10. Induktionsspulenschaltung gemäß Anspruch 9, worin der Regelungs-Schaltkreis einen Widerstand enthält.

11. Schaltkreis (F), der eine Serienschaltung von Spulen (L1, L2) enthält, **dadurch gekennzeichnet, dass** der Schaltkreis (F) weiterhin mindestens einen Überbrückungs-Schaltkreis (BPF) gemäß einem beliebigen der obigen Ansprüche 5 bis 10 über einer oder mehreren der Spulen (L1, L2) enthält.

## Revendications

1. Procédé pour éviter la saturation du noyau magnétique (M) d'une bobine d'inductance (L), ledit procédé comprenant les étapes de fournir un circuit de dérivation continu (BP) aux bornes de ladite bobine d'inductance (L) afin de dériver un courant continu vers ladite bobine, de sorte que le courant (I) qui est fourni à la bobine soit séparé en une composante continue et une composante alternative, la composante continue (I_{DC}) étant dirigée dans le circuit de dérivation et la composante alternative (I_{AC}) étant dirigée vers la bobine (L) même.

2. Procédé selon la revendication 1, dans lequel ladite étape de dérivation dudit courant continu est exécutée en fournissant une source de courant variable.

3. Procédé selon la revendication 1, dans lequel ledit procédé comprend en outre une étape consistant à fournir un circuit de régulation (RE) destiné à réguler le niveau du courant continu qui est dérivé.

4. Circuit de bobine d'inductance (LBP) comprenant un enroulement de bobine (L) autour d'un noyau magnétique (M), **caractérisé en ce que**
ledit circuit de bobine d'inductance (LBP) comprend en outre un circuit de dérivation (BP) destiné à dériver continuellement un courant continu à travers ledit enroulement de bobine (L) de sorte que le courant (I) qui est fourni à la bobine soit séparé en une composante continue et en une composante alternative, la composante continue (I_{DC}) de ce courant étant en outre dirigée dans le circuit de dérivation et la composante alternative (I_{AC}) de ce courant étant dirigée vers la bobine (L) même.

5. Circuit de bobine d'inductance (LBP) selon la revendication 4, dans lequel ledit circuit de dérivation (BP) comprend une source de courant variable.

6. Circuit de bobine d'inductance (LBP) selon la revendication 5, dans lequel ledit circuit de dérivation (BP) comprend un circuit gyrateur (R1, C2, T).

7. Circuit de bobine d'inductance (LBP) selon la revendication 4, dans lequel ledit circuit de bobine d'inductance comprend en outre un circuit de régulation (RE) destiné à réguler le niveau du courant continu (I_{DC}) qui est dérivé.

8. Circuit de bobine d'inductance (LBP) selon la revendication 7, dans lequel ledit circuit de régulation (RE) comprend des moyens (C1) pour créer une chute de tension continue aux bornes de ladite source de courant variable.

9. Circuit de bobine d'inductance selon la revendication 9, dans lequel ledit circuit de régulation comprend une capacité (C1).

10. Circuit de bobine d'inductance selon la revendication 9, dans lequel ledit circuit de régulation comprend une résistance.

11. Circuit (F) comprenant une connexion en série de bobines (L1, L2), **caractérisé en ce que** ledit circuit (F) comprend en outre au moins un circuit de dérivation (BPF) selon l'une quelconque des revendications précédentes 5 à 10 aux bornes d'une ou de plusieurs desdites bobines (L1, L2).
